# EUROPÄISCHE PATENTSCHRIFT

(11) **EP 2 990 835 B1**
(45) Veröffentlichungstag und Bekanntmachung des Hinweises auf die Patenterteilung: **27.05.2020**
(21) Anmeldenummer: 15182985.0
(22) Anmeldetag: 28.08.2015
(51) Int. Cl.: G01V 5/00

(54) **DETEKTORZEILE MIT BEREICHEN UNTERSCHIEDLICHER AUFLÖSUNG**
DETECTOR ROW WITH AREAS OF DIFFERENT RESOLUTION
LIGNE DE DETECTEURS AYANT DES ZONES A DIFFERENTE RESOLUTION

(30) Priorität: 01.09.2014 DE 102014217391
(43) Veröffentlichungstag der Anmeldung: 02.03.2016
(73) Patentinhaber: Smiths Heimann GmbH, 65205 Wiesbaden (DE)
(72) Erfinder: FRANK, Andreas, 65207 Wiesbaden (DE)
(74) Vertreter: Klunker IP Patentanwälte PartG mbB

(56) Entgegenhaltungen:
- WO-A1-98/05980
- WO-A2-2011/030240
- DE-A1- 3 530 938
- DE-A1- 10 015 191
- DE-A1-102012 215 527
- US-A1- 2002 054 659
- US-A1- 2007 181 813

## Beschreibung

Die vorliegende Erfindung betrifft allgemein die zerstörungsfreie Inspektion von Objekten und Personen mittels elektromagnetischer Strahlung. Im Besonderen betrifft die Erfindung eine Röntgeninspektionsanlage und ein Röntgeninspektionsverfahren, bei dem ein Objekt oder eine Person zur Erzeugung eines Röntgenbilds zeilenweise mit einer Detektorzeile mit Bereichen unterschiedlicher Auflösung abgetastet wird, um ein Röntgenbild mit einer ersten Auflösung basierend auf mit der gesamten Detektorzeile erfassten Intensitätswerten und gleichzeitig mindestens ein weiteres Röntgenbild mit einer zweiten höheren Auflösung basierend auf mindestens einem weiteren für eine höhere Auflösung eingerichteten Bereich der Detektorzeile zu erzeugen.

### Hintergrund der Erfindung

Es ist bekannt, ein zerstörungsfrei zu inspizierendes Objekt (Inspektionsobjekt) zeilenweisen mittels elektromagnetischer Strahlen, die von einer Strahlenquelle abgegeben werden, abzutasten, wobei Intensitäten der vom Inspektionsobjekt nicht absorbierten Strahlen von einer der Strahlenquelle zugeordneten Detektoranordnung erfasst und anschließend mittels bekannter Algorithmen in einem Computer zur Erzeugung eines Röntgenbilds des Objekts ausgewertet werden.

DE 101 49 254 A1 zeigt beispielsweise eine Röntgenprüfanlage mit mehreren feststehenden Röntgenstrahlungsebenen beispielsweise zur Sicherheitsüberprüfung von Gepäckstücken auf Flughäfen. Im Betrieb wird ein Gepäckstück zum zeilenweisen Abtasten durch die mehreren Strahlungsebenen gefördert, die jeweils von einer zugehörigen ortsfesten Strahlungsquelle abgegeben werden. Die vom Gepäckstück nicht absorbierten Röntgenstrahlen werden mit einer der jeweiligen Strahlungsquelle zugeordneten zeilenförmigen Detektoranordnung erfasst.

DE 693 16 544 T2 zeigt eine Vorrichtung zum zeilenweisen Abtasten des Körpers einer Person mit einem kollimierten Röntgenstrahl einer Röntgenstrahlenquelle, wobei eine relative Linearbewegung zwischen dem Körper und einer zeilenförmigen Detektoranordnung sowie der Röntgenstrahlenquelle in einer quer zu Platten eines Kollimators verlaufenden Richtung erfolgt.

DE 43 11 174 C2 zeigt eine Röntgenprüfanlage für Frachtcontainer und Lastkraftwagen mit einer Prüfstrecke, in der eine Röntgenquelle und eine zeilenförmige Detektoranordnung zum zeilenweisen Durchstrahlen und Abtasten des Containers und des Lastkraftwagens mit Röntgenstrahlen vorgesehen sind.

Um Bereiche eines Inspektionsobjekts gegenüber einer Darstellung des gesamten Objekts mit einer Standardauflösung in einer höheren Auflösung darstellen zu können, muss die eingesetzte Detektoranordnung für die maximal benötigte Auflösung, d. h. die höhere Auflösung, dimensioniert sein. Entsprechend müssen für die Gesamtansicht mit der niedrigeren Standardauflösung immer die mit der hochauflösenden Detektoreinheit erfassten Intensitätsdaten verarbeitet werden. D. h., wenn die höhere Auflösung das Doppelte der Standardauflösung beträgt, muss bereits das Vierfache an Intensitätsdaten als notwendig verarbeitet werden.

Alternativ könnten zwei Detektoranordnungen vorgesehen werden, von denen die eine für die niedrige Standardauflösung und die andere für eine zweite höhere Auflösung dimensioniert sind. Damit können Inspektionsobjekte zunächst für die Gesamtansicht mit der Standardauflösung und bei Bedarf ein zweites Mal mit der höheren Auflösung für eine Teilansicht abgetastet werden. Alternativ könnten auch beide Detektoranordnungen parallel verwendet werden.

Beide Lösungen sind aufwendig.

DE 35 30 938 A1 als nächster Stand der Technik zeigt eine Gepäckprüfanlage mit einen Strahlendetektor, bei dem die Anzahl der Einzeldetektoren pro Längeneinheit in einem ersten Bereich des Strahlendetektors, der vom Niveau einer Transportstrecke der Gepäckprüfanlage ausgeht, größer als diejenige in einem zweiten Bereich ist, der sich daran anschließt. Damit können Gegenstände kleinerer Abmessungen bei der Durchleuchtung in der Großgepäckprüfanlage in einem für sie günstigen Maßstab dargestellt werden, indem partiell an denjenigen Stellen des Strahlendetektors, an denen die Röntgenstrahlen auftreffen, die bei der Durchleuchtung kleinerer Gepäckstücke wirksam werden, Einzeldetektoren mit kleineren gegenseitigen Abständen eingesetzt werden. Damit kann entsprechend der Größe des Gepäckstücks der Abbildungsmaßstab umgeschaltet werden, indem bei kleinen Gepäckstücken ein Röntgenbild basierend auf denjenigen Stellen des Strahlendetektors erzeugt wird, an denen die Röntgenstrahlen auftreffen, die bei der Durchleuchtung des kleineren Gepäckstücks wirksam sind.

Die US2007181813 weist eine Röntgeninspektionsanlage zur zerstörungsfreien Inspektion auf mit variabeler Auflösung anhand einer Detektorarraygeometrie mit vier Armen. Die niedrigere Auflösungsdaten werden durch Mittelwertmessungen erhalten.

Die US2002054659 weist eine Detektoranordnung auf zusammengesetzt aus verschiedenen Detektorarrays mit Abteilen von Detektorelementen mit unterschiedlicher Dicke. Die Größe der Voxeldaten hängt von der Geometrie des Systems ab, von der Datenaufnahmegeschwindigkeit und von der Größe der Detektorelemente.

### Offenbarung der Erfindung

Es ist eine Aufgabe der Erfindung eine verbesserte Röntgenprüfanlage und ein verbessertes Verfahren zur zeilenweisen Abtastung von Objekten oder Personen mittels Röntgenstrahlen vorzuschlagen, die einen schnellen Wechsel zwischen einer Gesamtansicht mit einer Standardauflösung und einer Teilansicht mit einer höheren Auflösung des Inspektionsobjekts ermöglichen.

Die Aufgabe wird mit den Merkmalen der unabhängigen Ansprüche 1 und 14 gelöst.

Ausführungsbeispiele und vorteilhafte Weiterbildungen sind in den sich jeweils anschließenden Unteransprüchen definiert. Dabei gelten Merkmale und Details, die in Zusammenhang mit dem erfindungsgemäßen Verfahren beschrieben sind, selbstverständlich auch in Zusammenhang mit der erfindungsgemäßen Vorrichtung und jeweils umgekehrt. Daher wird bezüglich der Offenbarung der einzelnen Aspekte wechselseitig Bezug genommen.

Ein Kerngedanke der Erfindung besteht zunächst darin, eine Detektorzeile in verschiedene Abschnitte oder Bereiche aufzuteilen, wobei sich wenigstens das Rastermaß der Detektorelemente in den Abschnitten, bevorzugt um ein ganzzahliges Vielfaches n, unterscheidet. Vorzugsweise besitzen alle Detektorelemente die gleiche Breite in Förderrichtung (Abtastrichtung) des Inspektionsobjekts. In Abschnitten für eine Abtastung mit einer höheren Auflösung ist das Rastermaß entsprechend kleiner dimensioniert. Die Auslesefrequenz der kompletten Detektorzeile wird bevorzugt auf den hochauflösenden Abschnitt der Detektorzeile abgestimmt, d. h., die Auslesefrequenz des Abschnitts für die niedrigste Auflösung (Standardauflösung) ist dann bevorzugt um den Faktor n größer als eigentlich notwendig. Durch Anordnung wenigstens eines Abschnitts für eine Abtastung mit einer höheren Auflösung in einem Bereich, in dem im Einsatz der Röntgenprüfanlage die Röntgenstrahle auftreffen, die besonders interessierende Bereiche eines Objekts oder einer Person durchlaufen haben, können wenigstens ein Röntgenbild mit einer ersten Auflösung basierend auf mit der gesamten Detektorzeile erfassten Intensitätswerten und gleichzeitig wenigstens ein weiteres Röntgenbild mit einer zweiten (höheren) Auflösung basierend auf dem mindestens einen weiteren für eine höhere Auflösung eingerichteten Abschnitt der Detektorzeile erzeugt werden.

In einer Standarddarstellung kann somit das ganze Inspektionsobjekt (Gesamtansicht) mit einer (niedrigen) Standardauflösung abgebildet werden, wobei jeweils mehrere Intensitätsdaten benachbarter Detektorelemente des wenigstens einen hochauflösenden Abschnitts der Detektorzeile entsprechend einem Bildpunkt der Standardauflösung zusammengefasst werden. D. h., wenn der hochauflösend Abschnitt eine n-fach höhere Auflösung als die Standardauflösung hat, dann werden Intensitätsdaten von jeweils n benachbarten Detektorelementen entlang der Detektorzeile für n Auslesungen (Zeilen) des hochauflösenden Abschnitts zusammengefasst. Aus den n x n Intensitätsdaten kann dann ein Intensitätsdatum eines virtuellen Detektorelements für die Standardauflösung berechnet werden. In den Abschnitten der Detektorzeile mit der Standardauflösung werden die Intensitätsdaten jedes einzelnen Detektorelements über jeweils n Auslesungen (Zeilen) für einen resultierenden Bildpunkt gemittelt. Soll nur der hochauflösende Abschnitt der Detektorzeile für eine Teilansicht mit höherer Auflösung dargestellt werden, werden die Intensitätsdaten jedes Detektorelements des hochauflösenden Abschnitts der Detektorzeile für jeweils einen Bildpunkt (Pixel) der Teilansicht (ohne Mittelung über die Auslesungen) verwendet.

Ein erster Aspekt der Erfindung betrifft somit eine Röntgeninspektionsanlage zur zerstörungsfreien Inspektion von Inspektionsobjekten. Die Röntgeninspektionsanlage weist u. a. auf: eine Detektoreinheit mit einer Detektorzeile, die in einer Längsrichtung angeordnete Detektorelemente zur Detektion von Röntgenstrahlen aufweist und deren Längsrichtung in einem Winkel, bevorzugt orthogonal, zu einer Abtastrichtung für eine zeilenweise Abtastung eines Inspektionsobjekts angeordnet ist. Die Detektorzeile ist zur Abtastung des Inspektionsobjekts in wenigstens einem ersten Abschnitt der Detektorzeile mit ersten Detektorelementen für eine erste Auflösung und mindestens in einem weiteren Abschnitt der Detektorzeile mit zweiten Detektorelementen für eine zweite Auflösung, die höher als die erste Auflösung ist, eingerichtet. Erfindungsgemäß ist die Röntgeninspektionsanlage eingerichtet, basierend auf mittels der ersten und zweiten Detektorelemente erfasster Intensitätswerte für Röntgenstrahlen Bildpunkte wenigstens einer Zeile eines Röntgenbilds für das Inspektionsobjekt zu bestimmen und weist dazu weiter eine Steuereinheit auf, die eingerichtet ist, alle, d.h. die ersten und zweiten, Detektorelemente der Detektorzeile mit einer Auslesefrequenz, die durch den mindestens einen weiteren Abschnitt mit der höchsten Auflösung bestimmt ist, auszulesen. Die Steuereinheit ist weiter eingerichtet, gleichzeitig ein Röntgenbild mit der ersten Auflösung basierend auf mit der gesamten Detektorzeile erfassten Intensitätsinformationen als auch mindestens ein weiteres Röntgenbild mit der zweiten Auflösung basierend auf in dem mindestens einen weiteren Abschnitt erfassten Intensitätsdaten zu erzeugen.

Erfindungsgemäß ist die Steuereinheit eingerichtet, zur Erzeugung des Röntgenbildes basierend auf mit der gesamten Detektorzeile erfassten Intensitätsinformationen, Intensitätsinformationen der zweiten Detektorelemente in dem mindestens einen weiteren Abschnitt von aneinander angrenzenden Gruppen aus einer vorbestimmten Anzahl zweiter Detektorelemente in der Längsrichtung und einer entsprechenden Anzahl aufeinanderfolgender Auslesungen zur Bestimmung eines Intensitätsdatums für einen Bildpunkt der ersten Auflösung zusammenzufassen, und zur Erzeugung eines Röntgenbildes basierend auf in dem mindestens einen weiteren Abschnitt erfassten Intensitätsdaten pro Auslesung der zweiten Detektorelemente einen Bildpunkt des Röntgenbilds zu erzeugen.

Bevorzugt ist die Steuereinheit konfiguriert, das Röntgenbild mit der ersten Auflösung und das mindestens eine weitere Röntgenbild mit der zweiten Auflösung wahlweise umschaltbar und/oder nebeneinander auf einer Anzeigeeinheit durch einen Benutzer steuerbar anzuzeigen.

Bevorzugt weisen die Detektorelemente in allen Abschnitten denselben oder annähernd denselben Füllfaktor auf. Dabei ist der Füllfaktor das Verhältnis der Sensorfläche zur für die Erfassung von Röntgenstrahlen sensitiven Sensorfläche.

Die Detektorelemente sind bevorzugt für die im jeweiligen Abschnitt gewünschte Auflösung mittels der Länge der Detektorelemente in Längsrichtung dimensioniert und des erforderlichen Rastermaßes angeordnet. Beispielsweise können die Detektorelemente in dem ersten Abschnitt für die Standardauflösung mittels einer ersten Länge dimensioniert und mit einem ersten Rastermaß angeordnet sein. In dem mindestens einen weiteren Abschnitt können die Detektorelemente für eine zweite, höhere Auflösung mittels einer zweiten Länge dimensioniert und mit einem zweiten Rastermaß angeordnet sein. Die zweite Länge und entsprechend das zweite Rastermaß sind kleiner als die erste Länge und das erste Rastermaß. Damit ist die Auflösung für die Abtastung des Inspektionsobjekts im ersten Abschnitt der Detektorzeile geringer als in dem mindestens einen weiteren Abschnitt der Detektorzeile. Vermittels der kleineren Länge haben die Detektorelemente in dem mindestens einen weiteren Abschnitt eine kleinere Oberfläche bzw. einen kleineren Wirkungsquerschnitt zusammen mit dem kleineren Rastermaß ist die Auflösung der Detektorzeile in diesem Abschnitt größer als die Standardauflösung im ersten Abschnitt.

Es sei angemerkt, dass der mindestens eine weitere Abschnitt mit einer höheren Auflösung als die Standardauflösung beliebig an/auf der Detektorzeile, d. h. abgestimmt auf die jeweilige Anwendung, angeordnet sein kann. Beispielsweise kann ein hochauflösender weiterer Abschnitt in der Mitte oder an einem Rand der Detektorzeile angeordnet sein. Es können auch mehrere hochauflösende weitere Abschnitte auf der Detektorzeile vorgesehen sein. Die Detektorzeile kann auch mehrere weitere Abschnitte aufweisen. Die weiteren Abschnitte können alle für die gleiche Auflösung oder jeweils unterschiedliche Auflösungen eingerichtet sein. Die mindestens eine zweite Auflösung oder die mehreren zweiten Auflösungen sind jedenfalls größer als die erste Auflösung (Standardauflösung).

Bevorzugt weist die Detektoreinheit genau eine Detektorzeile auf. D. h., die Detektorzeile besteht in Längsrichtung der Detektorzeile aus einer Vielzahl von Detektorelementen und ist in Abtastrichtung nur ein Detektorelement breit. Bevorzugt weisen alle Detektorelemente, d. h. in allen Abschnitten der Detektorzeile, dieselbe Breite auf. Besonders bevorzugt entspricht die Breite aller Detektorelemente der Detektorzeile der Länge der Detektorelemente im ersten Abschnitt der Detektorzeile mit der Standardauflösung. D. h., die Breite eines Detektorelements des ersten Abschnitts definiert die Breite der Detektorzeile.

Bevorzugt ist die Auflösung in dem mindestens einen weiteren Abschnitt ein ganzzahliges Vielfaches n der Standardauflösung des ersten Abschnitts. D. h., die Auflösung in einem weiteren Abschnitt ist ein n-faches der Standardauflösung, mit n = 2,3,4 ... Entsprechend ist das Rastermaß der Detektorelemente in Längsrichtung in dem mindestens einen weiteren Abschnitt um das n-fache kleiner als im ersten Abschnitt. Die Detektorelemente eines weiteren Abschnitts sind also bei gleicher Breite in Abtastrichtung in Längsrichtung der Detektorzeile kürzer als in einem ersten Abschnitt der Standardauflösung.

Bevorzugt verläuft die Längsrichtung der Detektorzeile orthogonal zur Abtastrichtung für das Inspektionsobjekt. Ein Inspektionsobjekt kann sich bewegen oder wird bewegt durch einen Inspektionsbereich, der sich zwischen einer Röntgenstrahlenquelle und der dazu relativ ortsfest angeordneten Detektorzeile befindet. Alternativ ist es auch möglich, die Röntgenstrahlenquelle und die dazu relativ ortsfeste Detektorzeile an dem dazwischen ortsfest angeordneten Inspektionsobjekt in Abtastrichtung vorbei zu bewegen.

Das Inspektionsobjekt kann jedenfalls zeilenweise mittels auf die Detektoreinheit ausgerichteten kollimierten Röntgenstrahlen, bevorzugt in Form eines Fächers, durchleuchtet und entsprechend zeilenweise abgetastet werden. Der Fächer aus Röntgenstrahlen kann in bekannter Weise mit einem vor der Röntgenröhre als Röntgenstrahlenquelle angeordneten Kollimator erzeugt werden.

Wie bereits angesprochen ist die Steuereinheit eingerichtet, alle Detektorelemente der Detektorzeile mit einer Auslesefrequenz auszulesen, die durch den mindestens einen weiteren Abschnitt bestimmt ist. Wenn mehrere weitere Abschnitte mit unterschiedlichen höheren Auflösungen vorgesehen sind, definiert derjenige weitere Abschnitt, dessen Auflösung die höchste Auflösung ist, die Auslesefrequenz.

Die Auslesefrequenz oder Abtastfrequenz, mit der die Detektorelemente der Detektorzeile ausgelesen werden, ist bevorzugt größer oder gleich dem Produkt aus der Abtastgeschwindigkeit in Abtastrichtung und dem Kehrwert der Länge des Detektorelements in dem mindestens einen weiteren Abschnitt mit der höchsten Auflösung. Damit ist die Auslesefrequenz für Abschnitte der Detektorzeile mit der Standardauflösung jeweils um das Verhältnis der Auflösungen, d. h. der höchsten Auflösung geteilt durch die Standardauflösung, bevorzugt den ganzzahligen Faktor n größer als bei einer Detektorzeile, die nur Detektorelemente des ersten Abschnitts für die Standardauflösung enthält. Die Auslesefrequenz oder Abtastfrequenz ist damit auf die Geschwindigkeit, mit der das Inspektionsobjekt mittels einer Transporteinrichtung durch den Inspektionsbereich der Anlage bewegt wird, abgestimmt.

Beispielsweise kann die Fördergeschwindigkeit für ein Inspektionsobjekt oder die Geschwindigkeit, mit der die Anordnung aus Detektorzeile und Röntgenstrahlungsquelle am Inspektionsobjekt vorbeibewegt wird, 200 mm/s betragen. Wenn das Rastermaß der Detektorelemente im ersten Abschnitt mit der Standardauflösung 2,0 mm und im weiteren Abschnitt mit der höchsten Auflösung 1,0 mm beträgt und die Breite der Detektorelemente 1,5 mm beträgt, dann ergibt sich eine Mindestauslesefrequenz von 200 Hz. Während der Abtastung bewegt sich das Inspektionsobjekt um (200 mm/s)/200 Hz = 1 mm zwischen 2 Auslesungen. Die räumliche Auflösung des Röntgenbilds beträgt dann ohne Berücksichtigung von Vergrößerungseffekten aufgrund der relativen Lage des Inspektionsobjekts in Bezug zur Röntgenquelle und Detektorzeile 1,0 mm in der höheren Auflösung und 2,0 mm in der Standardauflösung.

Zur Erzeugung des Röntgenbildes basierend auf mit der gesamten Detektorzeile erfassten Intensitätsdaten fasst die Steuereinheit die Intensitätsdaten der Detektorelemente in dem mindestens einen weiteren Abschnitt in aneinander angrenzende Gruppen aus einer vorbestimmten Anzahl von Detektorelementen in Längsrichtung der Detektorzeile und von einer entsprechenden Anzahl aufeinanderfolgender Auslesungen (Zeilen) zur Bestimmung von Bildinformation für einen (virtuellen) Bildpunkt mit der Standardauflösung zusammen. Die vorbestimmte Anzahl bestimmt sich als der Quotient aus der Auflösung in dem weiteren Abschnitt und der Standardauflösung. Wie bereits diskutiert, ist dieser Quotient bevorzugt ganzzahlig, d. h. beträgt n, mit n = 1, 2, 3, .... D. h., eine solche Gruppe besteht aus einer Anzahl von n mal n Intensitätsdaten. Das Zusammenfassen der Intensitätsinformationen für eine Gruppe von n mal n Intensitätswerten kann mittels einer Mittelwertbildung für die Intensitätswerte berechnet werden. In ersten Abschnitten der Detektorzeile mit der Standardauflösung werden die Intensitätsdaten jedes Detektorelements entsprechend über n Auslesungen (n Zeilen) gemittelt.

Zur Erzeugung des Röntgenbilds basierend auf dem mindestens einen weiteren Abschnitt mit der zweiten (höheren) Auflösung für eine Teilansicht ist die Steuereinheit eingerichtet, dem für jedes Detektorelement des mindestens einen weiteren Abschnitts pro Abtastung erfassten Intensitätsdatum einen Bildpunkt der Teilansicht zuzuordnen. D. h., bei der Darstellung eines Röntgenbilds basierend auf einem hochauflösenden Abschnitt der Detektorzeile findet keine Mittelung des Signals über die Auslesung statt.

Die Röntgeninspektionsanlage kann weiter eine Mensch-Maschine-Schnittstelle in Form einer Tastatur, eines Zeigereingabegeräts (einer Maus, eines Touchpads, oder Ähnliches) zur Eingabe von Steuerungsbefehlen durch einen Bediener sowie die Anzeigeeinheit (beispielsweise einem Monitor) aufweisen. So kann die Steuereinrichtung eingerichtet sein, einem Bediener auf der Anzeigeeinheit auf Anforderung hin, beispielsweise durch Tastendruck auf der Tastatur oder Auswahl auf der Anzeige mittels des Zeigereingabegeräts, eine Gesamtdarstellung des Inspektionsobjekts mit der Standardauflösung oder eine Teilansicht basierend auf dem mindestens einen weiteren Abschnitt mit höherer Auflösung oder beide Ansichten gelichzeitig nebeneinander anzeigen.

In einer bevorzugten Ausführung der Röntgeninspektionsanlage ist die Anlage zur Körperinspektion einer Person eingerichtet. Die Detektorzeile ist bevorzugt parallel zu einer Körperlängsachse der Person angeordnet und der mindestens eine weitere Abschnitt mit der höheren Auflösung ist zur Inspektion eines bestimmten Körperbereichs der Person ausgerichtet. Der bestimmte Körperbereich der Person kann beispielsweise der Torso und/oder Kopf sein. Besonders bevorzugt ist die Abtastrichtung orthogonal zur Körperlängsachse ausgerichtet. Die Anlage kann eine Fördereinrichtung beispielsweise ein Transportband, zur Förderung der Person durch den Inspektionsbereich aufweisen. Alternativ kann die Anordnung aus der Röntgenstrahlenquelle und der dazu relativ ortsfest angeordneten Detektorzeile, wie beispielsweise aus der eingangs erwähnten DE 693 16 544 T2 bekannt, an dem Körper zur zeilenweisen Abtastung mittels einer Linearbewegung vorbeigeführt werden. Ein Unterschied zu der aus dem Stand der Technik bekannten Röntgeninspektionsanlage besteht darin, dass die Abtastrichtung nicht parallel, sondern orthogonal zur Körperlängsachse ausgerichtet ist. Die Röntgeninspektionsanlage zur Personeninspektion kann einem Bediener wahlweise und umschaltbar eine Gesamtkörperansicht (full-body) mit der Standardauflösung und eine Torso-Ansicht mit der wenigstens einen weiteren höheren Auflösung oder auch beide Ansichten nebeneinander anzeigen. Die Anlage muss hierfür nur mit einem Röntgengenerator und nur einer Detektorzeile ausgestattet sein. Damit ist eine erfindungsgemäße Röntgeninspektionsanlage hinsichtlich der Herstellungskosten günstiger. Da eine Person nicht zweimal abgetastet werden muss, um interessierende Bereiche mit einer höheren Auflösung inspizieren zu können, werden zu inspizierende Personen einer kleineren Röntgendosis ausgesetzt. Alternativ kann eine bessere Bildqualität im Vergleich zum Zweistrahlsystem erreicht werden, wenn beim erfindungsgemäßen Einstrahlsystem eine Röntgendosis wie beim Zweistrahlsystem des Standes der Technik akzeptiert werden kann, kann an der einen Röntgenstrahlenquelle ein höherer Anodenstrom entsprechend der Röntgendosis des Zweistrahlsystems eingesetzt werden, was zu einem Röntgenbild mit geringerem Bildrauschen führt.

In einer weiteren bevorzugten Ausführung der Röntgeninspektionsanlage ist die Anlage zur Inspektion eines Fahrzeugs und/oder eines Frachtcontainers eingerichtet. Die Detektorzeile ist bevorzugt für eine Seitenansicht des Fahrzeugs und/oder des Frachtcontainers oder für eine Draufsicht auf das Fahrzeug und/oder den Frachtcontainer orthogonal zu einer Längsachse des Fahrzeugs oder Containers, d. h. orthogonal zur Abtastrichtung, angeordnet. Dabei kann an wenigstens einem Ende, bevorzugt an beiden Enden, der Detektorzeile ein Abschnitt mit der Standardauflösung vorgesehen werden und in der Mitte der Detektorzeile mindestens ein weiterer Abschnitt mit der höheren Auflösung vorgesehen werden. Ähnlich wie bei der Personeninspektionsanlage diskutiert, ist auch bei einer Anordnung, die aus einem Lastkraftwagen mit einem darauf angeordneten Frachtcontainer besteht, üblicherweise bekannt, in welchem Bereich einer Gesamtansicht der Anordnung, sich besonders interessierende Bereiche für eine Inspektion befinden. Entsprechend kann die Detektorzeile für solche Röntgeninspektionsanlagen, wie vorstehend diskutiert, ausgestaltet werden. D. h., bei einem Lkw-Durchleuchtungssystem können in der Seitenansicht die uninteressanten Bildbereiche am oberen und unteren Ende der Detektorzeile mit der Standardauflösung ausgerüstet werden und der mittlere Bildbereich, in dem der Frachtcontainer abgebildet wird, mit dem wenigstens einem weiteren Abschnitt der höheren Auflösung ausgerüstet werden. Entsprechend wird bei Lkw-Durchleuchtungssystemen mit einer Röntgenstrahlungsquelle zentral über dem Fahrzeug, der mindestens eine weitere Abschnitt mit der höheren Auflösung in der Mitte der Detektorzeile vorgesehen.

In einer weiteren bevorzugten Ausführung der Röntgeninspektionsanlage ist die Anlage als Gepäckprüfanlage zur Inspektion von Gepäckstücken eingerichtet. Eine solche Anlage kann die erfindungsgemäße Detektorzeile zur Erzeugung einer Seitenansicht eines Gepäckstücks aufweisen. Die Detektorzeile kann dazu orthogonal zu einer Förderrichtung für das Gepäckstück durch die Anlage angeordnet sein. An der Detektorzeile kann wenigstens ein weiterer Abschnitt mit der höheren Auflösung so angeordnet sein, dass Gepäckstücke bis zu einer bestimmten Größe auf diesem weiteren Abschnitt abgebildet werden. Der erste Abschnitt mit der ersten Auflösung (Standardauflösung) schließt sich bevorzugt so an den weiteren Abschnitt an, dass auf den ersten Abschnitt ein Rest eines Gepäckstücks abgebildet wird, welches größer als die bestimmte Größe ist.

Die Detektorelemente der Detektorzeile können auch zur Erfassung von Röntgenstrahlen aus einem Energiebereich oder wenigstens zwei Energiebereichen eingerichtet sein. Werden Röntgenstrahlen aus wenigstens zwei Energiebereichen mit jedem Detektorelement erfasst, können die Intensitätsdaten mittels bekannten Dual-Energy-Auswerteverfahren ausgewertet werden, um für einen Bildpunkt des Röntgenbilds die effektive Kernladungszahl der in diesem Bereich des Inspektionsobjekts befindlichen Materialien zu bestimmen. Ein Dual-Energy-Detektorelement kann beispielsweise ein Detektorelement sein, wie es aus der EP 1 186 909 A bekannt ist, sein.

Ein zweiter Aspekt der Erfindung betrifft ein Verfahren zur zerstörungsfreien Inspektion von Inspektionsobjekten. Dabei wird mit einer Detektorzeile, die in einer Längsrichtung angeordnete erste Detektorelemente und zweite Detektorelemente zur Detektion von Röntgenstrahlen aufweist und die in einem Winkel, bevorzugt orthogonal, zu einer Abtastrichtung für eine zeilenweise Abtastung des Inspektionsobjekts angeordnet ist, basierend auf mittels der Detektorelemente erfasster Intensitätswerte für Röntgenstrahlen Bildpunkte wenigstens einer Zeile eines Röntgenbilds für das Inspektionsobjekt bestimmt, wobei Intensitätswerte für Röntgenstrahlen in wenigstens einem Abschnitt der Detektorzeile mit einer ersten Auflösung und mindestens in einem weiteren Abschnitt der Detektorzeile mit einer zweiten Auflösungen, die höher als die erste Auflösung ist, erfasst werden. Alle Detektorelemente der Detektorzeile werden mit einer Auslesefrequenz ausgelesen, die sich durch den weiteren Abschnitt mit der höchsten Auflösung bestimmt. Gleichzeitig werden ein Röntgenbild mit der ersten Auflösung basierend auf mit der gesamten Detektorzeile erfassten Intensitätsinformationen als auch mindestens eine weiteres Röntgenbild mit der zweiten Auflösung basierend auf in dem mindestens einen weiteren Abschnitt erfassten Intensitätsdaten erzeugt.

Zur Erzeugung eines Röntgenbildes basierend auf mit der gesamten Detektorzeile erfassten Intensitätsinformationen, werden Intensitätsinformationen der zweiten Detektorelemente in dem mindestens einen weiteren Abschnitt von aneinander angrenzenden Gruppen aus einer vorbestimmten Anzahl zweiter Detektorelemente in Längsrichtung und einer entsprechenden Anzahl aufeinanderfolgender Auslesungen zur Bestimmung eines Intensitätsdatums für einen Bildpunkt der ersten Auflösung zusammengefasst. Zur Erzeugung eines Röntgenbildes basierend auf im mindestens einen weiteren Abschnitt erfassten Intensitätsdaten wird pro Auslesung der zweiten Detektorelemente jeweils ein Bildpunkt des Röntgenbilds mit der höheren Auflösung erzeugt.

Bevorzugt werden das Röntgenbild mit der ersten Auflösung und das mindestens eine weitere Röntgenbild mit der zweiten Auflösung wahlweise umschaltbar und/oder nebeneinander auf einer Anzeigeeinheit durch einen Benutzer steuerbar angezeigt.

Die verbesserte Detektorzeile ist besonders vorteilhaft in Anlagen oder bei Verfahren zur Röntgeninspektion einsetzbar, die für Inspektionsobjekte eingesetzt werden, bei denen die Lage eines Bereichs, der mit einer höheren Auflösung betrachtbar sein soll, überwiegend im selben Bereich auch bei vielen verschiedenen Inspektionsobjekten angeordnet ist. Dies ist beispielsweise bei Röntgeninspektionsanlagen zur Personenkontrolle der Fall, wie sie an Sicherheitsüberprüfungsstellen an Grenzübergängen, im Strafvollzugsbereich, in Arbeitsbereichen mit kleinen Gegenständen von hohem Wert etc. eingesetzt werden. Beispielsweise können Personen an Grenzkontrollstellen oder Kontrollstellen im Strafvollzug auf im Körper transportierte "Bodypacks" mit illegalen Gegenständen oder Substanzen, wie Drogen, inspiziert werden. In Arbeitsbereichen mit kleinen Gegenständen mit hohem Wert, beispielsweise an Kontrollstellen an Ausgängen von Diamantenminen, können Personen auf im Körper versteckte Diamanten kontrolliert werden. Hier kann der hochauflösende Abschnitt der Detektorzeile zur Abtastung des Torsos und Kopfbereichs einer Person ausgerichtet sein, da diese Teile des Körpers grundsätzlich zum Verbergen von Gegenständen geeignet sind. Ein weiteres Beispiel sind Röntgeninspektionsanlagen zur Inspektion von Fahrzeugen und Frachtcontainern oder Gepäckstücken. Hier sind ebenfalls die Bereiche, für deren Inspektion eine höhere Auflösung vorteilhaft ist, bekannt.

### Bevorzugte Ausführungsbeispiele

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren.
Figur 1 zeigt eine Detektorzeile mit zwei ersten Abschnitten, die zur Abtastung eines Inspektionsobjekts mit einer Standardauflösung dimensioniert sind, und einem weiteren Abschnitt, in dem die Detektorelemente zum Abtasten des Inspektionsobjekts mit der doppelten Standardauflösung als höhere Auflösung dimensioniert sind.
Figur 2 zeigt eine Personeninspektionsanlage mit einer Detektorzeile, wie sie in der Figur 1 gezeigt ist.
Figur 3 zeigt ein Frachtinspektionssystem zur Inspektion von Lastkraftwagen mit auf der Ladefläche angeordneten Frachtcontainern.
Figur 4 veranschaulicht die Verarbeitung der mit einer Detektorzeile, wie in Figur 1 dargestellt, erfassten Intensitätsdaten zur Darstellung eines Röntgenbilds für eine Gesamtansicht des Inspektionsobjekts mit der Standardauflösung bzw. zur Darstellung eines Teilbereichs des Inspektionsobjekts mit der höheren Auflösung verarbeitet werden.

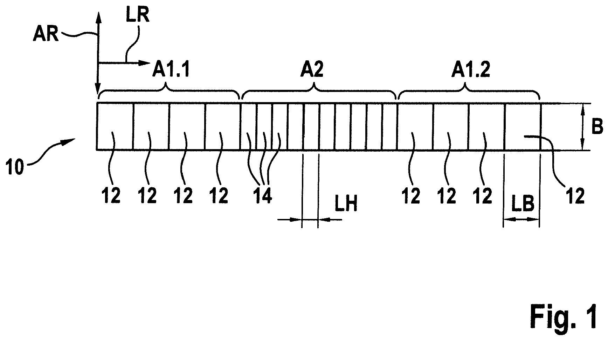

Figur 1 zeigt eine Detektorzeile 10 für eine Detektoreinheit einer Röntgeninspektionsanlage zur zerstörungsfreien Inspektion von Inspektionsobjekten.

Auf der Detektorzeile 10 sind erste Detektorelemente 12 und zweite Detektorelemente 14 in der Längsrichtung LR der Detektorzeile 10 zur Detektion von nicht durch ein Inspektionsobjekt absorbierten Röntgenstrahlen angeordnet.

Die Detektorzeile 10 weist zwei erste Abschnitte A1.1, A1.2 mit ersten Detektorelementen 12 auf, die jeweils eine Länge LB in der Längsrichtung LR der Detektorzeile 10 und einer Breite B, die gleich der ersten Länge LB ist, aufweisen. Die ersten Abschnitte A1.1, A1.2 sind für eine Abtastung mit einer ersten Auflösung (Standardauflösung) eingerichtet.

Ein weiterer Abschnitt A2 weist zweite Detektorelemente 14 mit einer Länge LH in der Längsrichtung LR der Detektorzeile 10 und der Breite B auf. Der zweite Abschnitt ist für eine zweite Auflösung, die höher als die erste Auflösung ist, eingerichtet.

Die Länge LH der zweiten Detektorelemente 14 entspricht der Hälfte der Länge LB der ersten Detektorelemente 12. Die Detektorelemente 12, 14 haben in allen Abschnitten A1.1, A1.2 und A2 denselben Füllfaktor.

Die ersten und zweiten Detektorelemente 12, 14 sind damit für eine jeweilige Auflösung des zugehörigen Abschnitts A1.1, A1.2, A2 mittels ihrer jeweiligen Länge LB, LH in Längsrichtung LR der Detektorzeile 10 sowie mittels dem jeweiligen Rastermaß, für die jeweilige Auflösung eingestellt.

In der Figur 1 beträgt die Auflösung in den ersten Abschnitten A1.1, A1.2 die Hälfte der Auflösung des weiteren Abschnitts A2. Die Detektorelemente 14 können aufgrund der halben Detektorfläche und des halben Rastermaß im Vergleich zu den Detektorelementen 12 das Inspektionsobjekt mit der doppelten Auflösung als die beiden ersten Abschnitte A1.1, A1.2 abtasten.

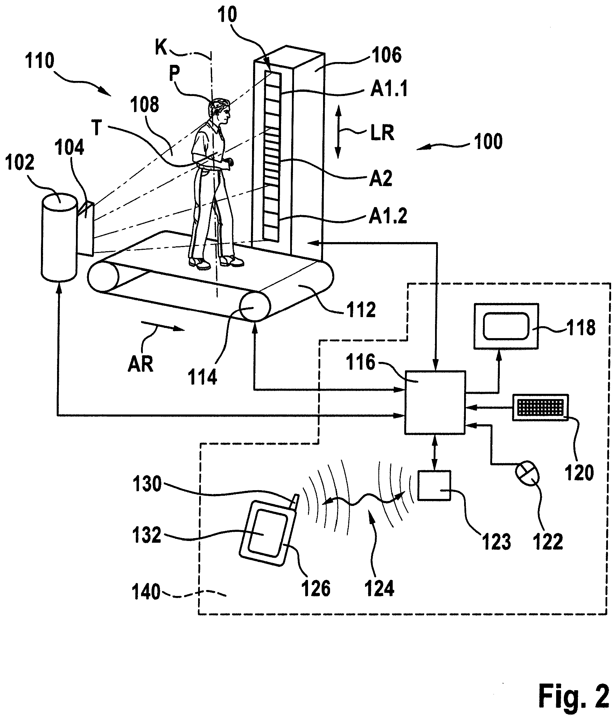

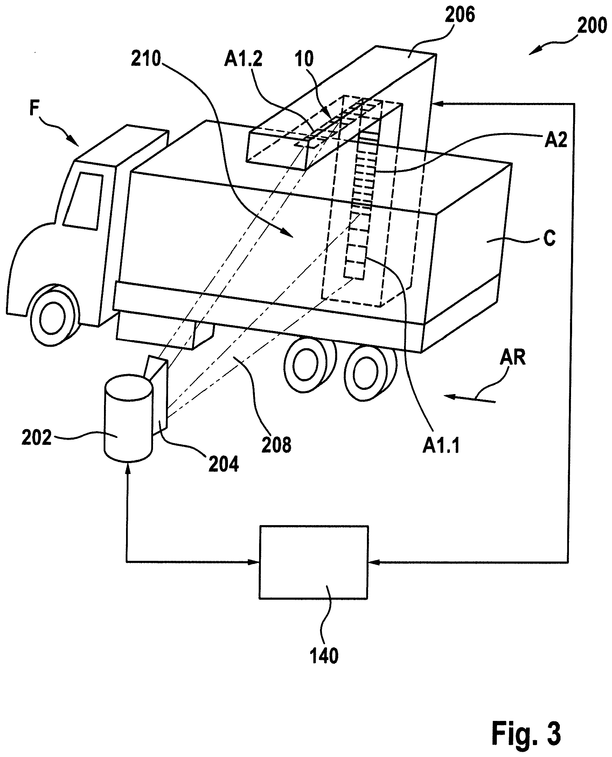

In der Figur 1 ist noch eine bevorzugte Abtastrichtung AR angedeutet, die orthogonal zur Längsrichtung LR der Detektorzeile 10 verläuft. D. h., damit ist angedeutet, dass die Detektorzeile 10 in einer Röntgeninspektionsanlage (vgl. Figur 2 und 3) bevorzugt quer zur Abtastrichtung AR für eine zeilenweise Abtastung eines Inspektionsobjekts angeordnet wird.

Figur 2 zeigt als ein Ausführungsbeispiel für eine Röntgeninspektionsanlage eine Personen-Röntgeninspektionsanlage 100 zur Körperinspektion einer Person P.

Eine Detektorzeile 10 ist parallel zu einer Körperachse K in einer Detektoreinheit 106 der Röntgeninspektionsanlage 100 angeordnet. Der Detektorzeile 10 gegenüber ist eine Röntgenröhre 102 als Röntgenstrahlenquelle angeordnet, an der sich ein Kollimator 104 zur Erzeugung eines Röntgenstrahlenfächers 108 befindet. Zwischen der Röntgenröhre 102 und der Detektoreinheit 106 befindet sich der Inspektionsbereich 110 durch den die Person P für eine Körperinspektion mittels eines Transportbandes 112 in Abtastrichtung AR transportiert wird. Damit wird die Person P mit der Detektorzeile 10 zeilenweise mit dem Röntgenstrahlenfächer 108 durchleuchtet und für die Erstellung eines Röntgenbildes abgetastet. Das Transportband 112 wird in bekannter Weise über ein Walze geführt, die mittels eines Motors 114 gesteuert angetrieben wird. Die Geschwindigkeit, mit der die Person P durch den Inspektionsbereich 110 transportiert wird, kann entsprechend der mit der Detektorzeile 10 maximal möglichen Abtastfrequenz eingestellt werden. Die maximal mögliche Abtastfrequenz hängt u. a. von der Schnelligkeit der Detektorelemente und der Verarbeitungsgeschwindigkeit der Anlage ab.

Eine Steuereinheit 116, bei der es sich im Wesentlichen um einen Computer mit bekanntem Aufbau handeln kann, ist neben anderen Hilfsfunktionen besonders zur Steuerung der Röntgenröhre 102, des Antriebsmotors 114 für das Transportband 112 und der Detektoreinheit 106 mittels bekannter Steuerleitungen und Datenleitungen operativ verbunden.

Die Steuereinheit 116 ist weiter mit einer Anzeigeeinheit 118 als Bildausgabeeinheit und einer Tastatur 120 und einer Maus 122 als Eingabeeinheiten verbunden. Alternativ oder zusätzlich zur Ausgabeeinheit 118 und den Eingabeeinheiten 120, 122 kann die Steuereinheit 116 auch mittels einer Funkverbindung 124 oder über eine Funknetzwerk mit einem mobilen Tablet-Computer 126 kommunikativ verbunden sein. Dazu ist die Steuereinheit 116 beispielsweise mit einer Funkkommunikationseinheit 128 und der Tablet-Computer 126 mit einer Funkkommunikationseinheit 130 ausgestattet. Damit können der Tablet-Computer 126 und die Steuereinheit 116 in bekannter Weise beispielsweise über eine Nahbereichsfunktechnologie, wie z. B. WLAN, Bluetooth oder dergleichen, kabellos kommunizieren. Der Tablet-Computer 126 kann als Anzeige- und Eingabeeinheit mit einem Touchscreen 132 ausgestattet sein. Zusätzlich kann der Tablet-Computer 126 auch eine Tastatur aufweisen bzw. Anschlussmöglichkeiten für eine Tastatur oder ein Zeigereingabegerät, wie eine Maus, aufweisen.

Die Steuereinheit 116 ist in bekannter Weise zur Steuerung der Röntgeninspektionsanlage 100 programmtechnisch mittels Software eingerichtet. Des Weiteren empfängt die Steuereinheit 116 die beim zeilenweisen Abtasten des Inspektionsobjekts, hier der Person P, aus der Detektoreinheit 106 erfassten Intensitätsdaten, die den jeweiligen Detektorelementen der Detektorzeile 10 zugeordnet werden können.

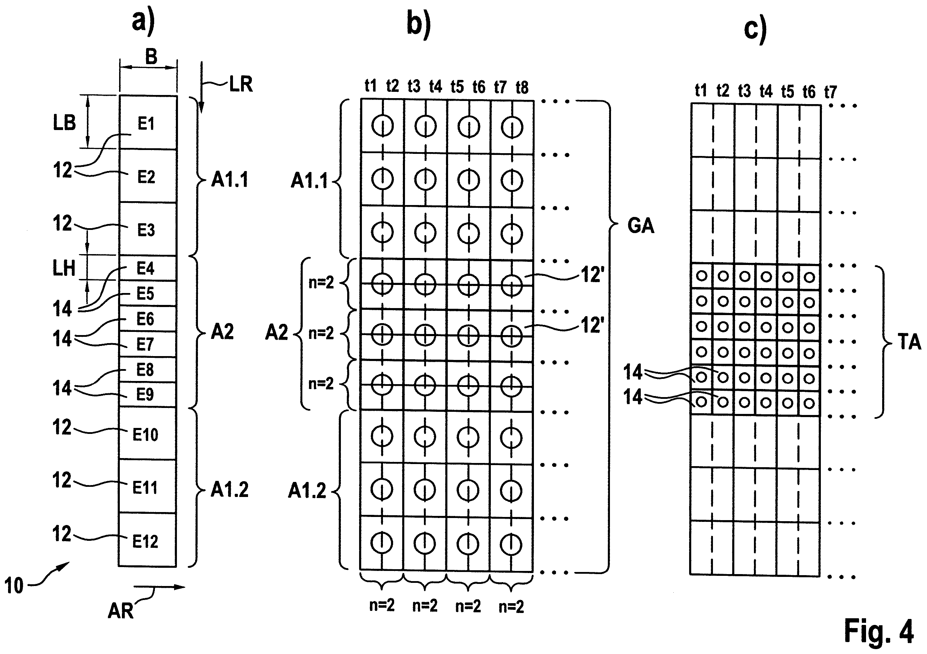

Die grundsätzliche Verarbeitung der bei der zeilenweisen Abtastung eines Inspektionsobjekts, hier der Person P, erfassten Intensitätsdaten zur Erzeugung eines Röntgenbilds des Inspektionsobjekts ist dem Fachmann auf dem Gebiet des Röntgens grundsätzlich aus dem Stand der Technik bekannt und wird daher hier nicht näher erläutert. Die mittels der Detektorzeile 10 (Figur 1) ermöglichte vorteilhafte Erzeugung einer Gesamtansicht des Inspektionsobjekts mit einer Standardauflösung und einer Teilansicht mit einer höheren Auflösung wird weiter unten anhand der Figur 4 näher erläutert.

In der Figur 2 sind die Komponenten der Röntgeninspektionsanlage 100, die eine Mensch-Maschine-Schnittstelle für eine Bedienperson bereitstellen sowie den funktionalen Betrieb der Röntgeninspektionsanlage 100 steuern, als Steuerungssystem 140 mit einer gestrichelten Linie eingefasst.

Figur 3 zeigt als ein zweites Ausführungsbeispiel eine Röntgeninspektionsanlage 200 zur Inspektion eines Fahrzeugs F als Inspektionsobjekt in Form eines Lastkraftwagens und eines auf einer Ladefläche des Fahrzeugs F angeordneten Frachtcontainers C. Eine solche Röntgeninspektionsanlage ist vom grundsätzlichen Aufbau beispielsweise aus der eingangs erwähnten DE 43 11 174 C2 bekannt. Der wesentliche Unterschied besteht in der hier vorgeschlagenen neuen Detektorzeile.

Eine stationäre Detektoreinheit 206 weist eine Detektorzeile 10, die im Vergleich zur Detektorzeile 10 der Figur 1 bzw. der Figur 2 zur räumlichen Optimierung L-förmig verläuft. Zweck und Vorteil einer L-förmigen Detektorzeile sind grundsätzlich bekannt und müssen hier nicht näher erläutert werden.

Gegenüber der Detektoreinheit 206 ist eine Röntgenröhre 202 als Röntgenstrahlungsquelle angeordnet und mit einem Kollimator 204 zur Erzeugung eines Röntgenstrahlenfächers 208, der auf die Detektorzeile 10 ausgerichtet ist, ausgestattet. Zwischen der Röntgenröhre 202 und der Detektoreinheit 206 befindet sich der Inspektionsbereich 210, durch den sich das Fahrzeug F und der Frachtcontainer C in Abtastrichtung AR bewegen.

Die Röntgeninspektionsanlage 200 wird von einem Steuersystem 140, welches grundsätzlich ähnlich aufgebaut ist, wie das Steuersystem 140 der Figur 2, gesteuert. Das Fahrzeug F bewegt sich mit dem Frachtcontainer C bei der gezeigten Röntgeninspektionsanlage 200 selbstständig durch den Inspektionsbereich 210 in Abtastrichtung. Daher ist keine Transporteinrichtung zum Transport des Fahrzeugs F und des Frachtcontainers C durch den Inspektionsbereich 210 gezeigt. Daher entfällt eine entsprechende Steuerverbindung zum Steuersystem 140. Selbstverständlich ist es aber möglich, das Fahrzeug F (ähnlich wie ein Fahrzeug in einer automatischen Waschstraße) mittels einer entsprechenden Transporteinrichtung durch den Inspektionsbereich 210 zu fördern (nicht gezeigt).

Die Detektorzeile 10 der Detektoreinheit 206 weist die zwei ersten Abschnitten A1.2 und A1.1 für die Abtastung mit Standardauflösung und den mittleren Abschnitt A2 für die Abtastung mit der höheren Auflösung auf. Die höhere Auflösung ist hier wieder das Doppelte der Standardauflösung.

Ein weiteres Beispiel (nicht abgebildetes) Anwendungsbeispiel für die hier vorgeschlagenen Detektorzeile ist eine Röntgeninspektionsanlage, die als Gepäckprüfanlage zur Inspektion von Gepäckstücken dient. Eine solche Röntgeninspektionsanlage ist vom grundsätzlichen Aufbau beispielsweise aus der eingangs erwähnten DE 101 49 254 A1 bekannt. Der wesentliche Unterschied besteht in der hier vorgeschlagenen neuen Detektorzeile.

Die Detektorzeile kann, ähnlich wie bei der Anlage der Figur 3, zur Erzeugung einer Seitenansicht eines Gepäckstücks orthogonal zu der Förderrichtung für Gepäckstücke durch die Anlage angeordnet werden. Durch eine solche Röntgeninspektionsanlage werden zu inspizierende Gepäckstücke mittels einer Fördereinrichtung, wie beispielsweise einem Transportband, transportiert und durch wenigstens eine im Inneren der Anlage installierte Anordnungen aus einer Röntgenstrahlenquelle und einer zugeordneten Detektorzeile bewegt zur Durchleuchtung und Abtastung mit Röntgenstrahlen bewegt werden. An der Detektorzeile ist dann ein weiterer Abschnitt mit der höheren Auflösung so angeordnet, dass auf diesen Abschnitt Gepäckstücke bis zu einer bestimmten Größe abgebildet werden. Ein erster Abschnitt mit der niedrigsten Auflösung (Standardauflösung) schließt sich wenigstens an einer Seite des weiteren Abschnitts so an, dass auf den ersten Abschnitt mit der Standardauflösung der Rest von Gepäckstücken abgebildet wird, die größer als die bestimmte Größe sind.

Figur 4 zeigt im linken Teil a) die Detektorzeile 10 der Figur 1 mit den ersten Abschnitten A1.1, A1.2., in denen sich die ersten Detektorelemente 12 mit der Länge LB in Längsrichtung LR der Detektorzeile 10 befinden, und den weiteren Abschnitt A2, in dem sich die zweiten Detektorelemente 14 mit der Länge LH in Längsrichtung LR der Detektorzeile 10 befinden. Die Detektorelemente 14 besitzen genau die halbe Länge der Detektorelemente 12, d. h. (2 x LH) = LB und sind im halben Rastermaß der ersten Abschnitte A1.1, A1.2 angeordnet. Damit ist der zweite Abschnitt A2 für eine doppelte Auflösung als die ersten Abschnitte A1.1, A1.2 dimensioniert. Mit anderen Worten ist die Auflösung im weiteren Abschnitt A2 ganzzahlig um einen Faktor n = 2 größer als die Standardauflösung in den ersten Abschnitten A1.1, A1.2.

Wie die Steuereinheit 116 des Steuersystems 140 der Röntgeninspektionsanlage 100 der Figur 2 bzw. 200 der Figur 3 basierend auf den mit der Detektorzeile 10 beim Abtasten eines Inspektionsobjekts zeilenweise erfassten Intensitätsinformationen ein Röntgenbild mit einer Gesamtansicht des Inspektionsobjekts mit der Standardauflösung bzw. ein Röntgenbild einer Teilansicht des Inspektionsobjekts mit der doppelten Auflösung erzeugt, ist in den Bereichen b) und c) der Figur 4 veranschaulicht.

Der Teil b) der Figur 4 veranschaulicht zunächst die erfassten Intensitätsinformationen die in den Abschnitten A1.1, A1.2 und A2 der Detektorzeile 10 in aufeinanderfolgenden Abtastzyklen t1, t2, t3, ... usw. erfasst werden. Basierend auf diesen zeilenweise und zeitlich geordneten Intensitätsdaten kann ein Röntgenbild mit einer Gesamtansicht GA des Inspektionsobjekts erzeugt werden.

Wie eingangs erläutert, bestimmt sich die Auslesefrequenz/Abtastfrequenz für die Detektorzeile 10 im Wesentlichen aus der Abtastgeschwindigkeit in Abtastrichtung AR, d. h. der Geschwindigkeit, mit der das Inspektionsobjekt durch den Inspektionsbereich (108 Figur 2 und 208 Figur 3) bewegt wird und dem Kehrwert der Länge eines zweiten Detektorelements 14 im weiteren Abschnitt A2 für die höchste Auflösung.

In den hier zur Veranschaulichung erläuterten Ausführungsbeispielen ist der einzige weitere Abschnitt A2 der Detektorzeile 10 für die doppelte Auflösung als die ersten Abschnitte A1.1, A1.2 eingerichtet. D. h., die Auslesefrequenz, mit der alle Detektorelemente 12, 14 der Detektorzeile 10 von der Steuereinheit 116 im Betrieb ausgelesen werden, ist für die ersten Abschnitte A1.1, A1.2 doppelt so groß (n = 2) als grundsätzlich notwendig. Damit werden für die Abschnitte A1.1, A1.2 mit den ersten Detektorelementen 12 doppelt so viele Intensitätsdaten als aufgrund des Auflösungsvermögens dieser Abschnitte erforderlich erfasst und gespeichert.

Zur Erzeugung eines Bildpunkts für eine Gesamtansicht des Inspektionsobjekts ist die Steuereinheit 116 eingerichtet, die für die ersten Detektorelemente 12 während zwei aufeinanderfolgender Auslesungen (z. B. für t1 und t2, t3 und t4, ... usw.) erfassten Intensitätsinformationen durch eine Mittelwertbildung zusammenzufassen. D. h., mittels der Intensitätsdaten der ersten Detektorelemente 12 in den ersten Abschnitten A1.1, A1.2 werden jeweils für zwei aufeinanderfolgende Auslesungen ein Bildpunkt (als großer Kreis in der Figur 4 b) veranschaulicht) entsprechend der Auflösung der Detektorelemente 12 für das Gesamtansichtsröntgenbild erzeugt und ebenfalls gespeichert.

Im Abschnitt A2 der Detektorzeile liegen die mit den zweiten Detektorelementen 14 erfassten Intensitätsdaten für eine doppelt so hohe Auflösung als die Standardauflösung der ersten Abschnitte A1.1, A1.2 vor. Um aus den mit dem weiteren Abschnitt A2 erfassten Intensitätsdaten Bildpunkte mit der Standardauflösung zu erzeugen, ist die Steuereinheit 116 eingerichtet, jeweils die Intensitätsdaten zweier (n=2) benachbarter Detektorelemente 14 in Längsrichtung LR der Detektorzeile 10 sowie für zwei (N=2) aufeinanderfolgende Auslesungen (z. B. für t1 und t2, t3 und t4, ... usw.) zu einer Gruppe (mit jeweils 2 x 2 = 4 Intensitätswerten) zusammenzufassen, um daraus ein Intensitätsdatum für ein virtuelles Detektorelement 12' zu berechnen. Dazu werden die Intensitätswerte zweier in der Detektorzeile nebeneinanderliegender zweiter Detektorelemente sowie zweier aufeinanderfolgender Abtastungen addiert und gemittelt. Mit anderen Worten werden im Abschnitt A2 aus den mit den hoch auflösenden Detektorelementen 14 erfassten Intensitätsdaten die Intensitätsdaten für virtuelle Detektorelemente 12' mit der Standardauflösung berechnet. Dies wird über alle während der Abtastung des Inspektionsobjekts erfassten Intensitätsdaten durchgeführt, bis alle für das Inspektionsobjekt erfassten Abtastwerte verarbeitet und gespeichert sind.

Die so erzeugte Gesamtansicht GA kann auf der Anzeigeeinheit 118 bzw. dem Touchscreen 132 des Tablet Computers 126 des Steuersystems 140 einer Bedienperson entsprechend in bekannter Weise angezeigt werden.

Wenn die Bedienperson den zum weiteren Abschnitt A2 der Detektorzeile 10 korrespondierenden Bereich des Inspektionsobjekts in einer Teilansicht TA mit der doppelten Auflösung als der Standardauflösung betrachten möchte, kann die Bedienperson über eine entsprechende Auswahlfunktion an der Steuereinheit 116 eine Teilansicht auswählen. Dies kann beispielsweise über eine entsprechende Befehlseingabe auf dem Tablet-Computer 126 oder der Tastatur 120 oder über eine auf der Anzeigeeinrichtung 118 angezeigte Auswahlmöglichkeit, die mittels der Maus 122 ausgewählt werden kann, oder eine beliebig andere Auswahlmöglichkeit erfolgen.

Die Steuereinheit 116 erzeugt dann basierend auf den gespeicherten original abgetasteten Intensitätsdaten, die mit den zweiten Detektorelementen 14 im weiteren Abschnitt A2 erfasst wurden, ein Röntgenbild, das der Teilansicht TA des Inspektionsobjekts entspricht. Dazu werden die mit den zweiten Detektionselementen 14 für jede Auslesung t1, t2, t3, ... erfassten Intensitätsdaten zur Berechnung eines entsprechenden Bildpunkts (als kleiner Kreis in Figur 4 c) veranschaulicht) des Röntgenbilds der Teilansicht verwendet. D. h., hier findet keine Mittelung der Intensitätsdaten entlang der Detektorzeile 10 bzw. über zeitlich aufeinanderfolgende Auslesungen statt. Jeder Bildpunkt des hochauflösenden Detektorzeilenteils A2 wird ohne Mittelung als Bildpunkt der Teilansicht TA dargestellt.

Die so erzeugte Teilansicht TA kann ebenfalls auf der Anzeigeeinheit 118 bzw. dem Touchscreen 132 des Tablet Computers 126 des Steuersystems 140 der Bedienperson allein oder zusätzlich zur Gesamtansicht angezeigt werden.

Abschließend sei darauf hingewiesen, dass die Darstellung der Detektorzeile in den Figuren 1 bis 4 rein schematisch zur Veranschaulichung des Prinzips stark vereinfacht dargestellt ist. In einer echten Detektorzeile befinden sich selbstverständlich deutlich höhere Vielzahlen von Detektorelementen 12 bzw. 14 in den entsprechenden Abschnitten A1.1, A1.2 und A2.

## Patentansprüche

1. Röntgeninspektionsanlage (100; 200) zur zerstörungsfreien Inspektion von Inspektionsobjekten (P; F, C), aufweisend eine Detektoreinheit (106; 206) mit einer Detektorzeile (10), die in einer Längsrichtung (LR) angeordnete Detektorelemente (12, 14) zur Detektion von Röntgenstrahlen (108; 208) aufweist und deren Längsrichtung (LR) in einem Winkel zu einer Abtastrichtung (AR) für eine zeilenweise Abtastung eines Inspektionsobjekts (P; F, C) angeordnet ist,
wobei die Detektorzeile (10) zur Abtastung des Inspektionsobjekts (P; F, C) in wenigstens einem ersten Abschnitt (A1.1, A1.2) der Detektorzeile (10) mit ersten Detektorelementen (12) für eine erste Auflösung und mindestens in einem weiteren Abschnitt (A2) der Detektorzeile (10) mit weiteren Detektorelementen (14) für eine zweite Auflösung, die höher als die erste Auflösung ist, eingerichtet ist, und
wobei die Röntgeninspektionsanlage (100; 200) eingerichtet ist, basierend auf mittels der Detektorelemente (12, 14) erfasster Intensitätswerte für Röntgenstrahlen Bildpunkte wenigstens einer Zeile eines Röntgenbilds für das Inspektionsobjekt (P; F, C) zu bestimmen und dazu weiter eine Steuereinheit (116) aufweist, wobei die Steuereinheit (116) eingerichtet ist, zur Erzeugung eines Röntgenbildes basierend auf mit der gesamten Detektorzeile (10) erfassten Intensitätsinformationen, Intensitätsinformationen der zweiten Detektorelemente (14) in dem mindestens einen weiteren Abschnitt (A2) von aneinander angrenzenden Gruppen aus einer vorbestimmten Anzahl zweiter Detektorelemente (14) in der Längsrichtung (LR) und einer entsprechenden Anzahl aufeinanderfolgender Auslesungen (t1, t2, t3, ...) zur Bestimmung eines Intensitätsdatums für einen Bildpunkt der ersten Auflösung zusammenzufassen, und zur Erzeugung eines Röntgenbildes basierend auf in dem mindestens einen weiteren Abschnitt (A2) erfassten Intensitätsdaten pro Auslesung der zweiten Detektorelemente (14) einen Bildpunkt des Röntgenbilds zu erzeugen,
**dadurch gekennzeichnet, dass** die Steuereinheit (116) eingerichtet ist,
- alle Detektorelemente (12, 14) der Detektorzeile (10) mit einer Auslesefrequenz, die durch den weiteren Abschnitt (A2) mit der höchsten Auflösung bestimmt ist, auszulesen und
- gleichzeitig ein Röntgenbild mit der ersten Auflösung basierend auf mit der gesamten Detektorzeile (10) erfassten Intensitätsinformationen als auch mindestens ein weiteres Röntgenbild mit der zweiten Auflösung basierend auf in dem mindestens einen weiteren Abschnitt (A2) erfassten Intensitätsdaten zu erzeugen.

2. Röntgeninspektionsanlage (100; 200) nach Anspruch 1, wobei die Längsrichtung (LR) der Detektorzeile (10) orthogonal zu der Abtastrichtung (AR) angeordnet ist.

3. Röntgeninspektionsanlage (100; 200) nach Anspruch 1 oder 2, wobei die Detektoreinheit (106; 206) genau eine Detektorzeile (10) aufweist.

4. Röntgeninspektionsanlage (100; 200) nach einem der vorhergehenden Ansprüche, wobei alle Detektorelemente (12, 14) der Detektorzeile (10) in Abtastrichtung (AR) gleich breit sind.

5. Röntgeninspektionsanlage (100; 200) nach einem der vorhergehenden Ansprüche, wobei die Breite (B) aller Detektorelemente (12, 14) der Länge (LB) der ersten Detektorelemente (12) im ersten Abschnitt (A1.1, A1.2) entspricht.

6. Röntgeninspektionsanlage (100; 200) nach einem der vorhergehenden Ansprüche, wobei die weiteren Detektorelemente (14) in dem mindestens einen weiteren Abschnitt (A2) für eine Auflösung eingerichtet sind, die ein ganzzahliges Vielfaches (n) der ersten Auflösung ist.

7. Röntgeninspektionsanlage (100; 200) nach einem der Ansprüche 1 bis 6, wobei die Auslesefrequenz größer oder gleich dem Produkt aus der Abtastgeschwindigkeit in Abtastrichtung (AR) und dem Kehrwert der Länge (LH) eines zweiten Detektorelements (12) in dem weiteren Abschnitt (A2) mit der höchsten Auflösung ist.

8. Röntgeninspektionsanlage (100; 200) nach einem der vorhergehenden Ansprüche, wobei die Steuereinheit (116) eingerichtet ist, bei der Erzeugung eines Röntgenbildes basierend auf mit der gesamten Detektorzeile (10) erfassten Intensitätsinformationen die vorbestimmte Anzahl zweiter Detektorelemente (14) in Längsrichtung (LR) und die entsprechende Anzahl aufeinanderfolgender Auslesungen (t1, t2, t3, ...) als Quotienten aus der Auflösung in dem weiteren Abschnitt (A2) geteilt durch die Auflösung des wenigstens einen ersten Anschnitts (A1.1, A1.2) zu bestimmen.

9. Röntgeninspektionsanlage (100) nach einem der vorhergehenden Ansprüche, wobei die Anlage (100) zur Körperinspektion einer Person (P) eingerichtet ist, wobei die Detektorzeile (10) parallel zur Körperlängsachse (K) der Person (P) angeordnet und mindestens ein weiterer Abschnitt (A2) zur Inspektion eines bestimmten Körperbereichs der Person (P) ausgerichtet ist, und die Abtastrichtung (AR) orthogonal zur Körperlängsachse (K) ausgerichtet ist.

10. Röntgeninspektionsanlage (100) nach Anspruch 9, wobei der mindestens eine weitere Abschnitt (A2) zur Inspektion des Torsos (T) und/oder des Kopfes der Person (P) ausgerichtet ist.

11. Röntgeninspektionsanlage (200) nach einem der vorhergehenden Ansprüche, wobei die Anlage (200) zur Inspektion eines Fahrzeugs (F) und/oder eines Frachtcontainers (C) eingerichtet ist und die Detektorzeile (10) für eine Seitenansicht des Fahrzeugs (F) und/oder des Frachtcontainers (C) oder für eine Draufsicht auf das Fahrzeug (F) und/oder den Frachtcontainer (C) orthogonal zu einer Längsachse des Fahrzeugs (F) oder Frachtcontainers (C) angeordnet ist, wobei an wenigstens einem Ende der Detektorzeile (10) ein erster Abschnitt (A1.1, A1.2) und in der Mitte der Detektorzeile (10) mindestens ein weiterer Abschnitt (A2) angeordnet ist.

12. Röntgeninspektionsanlage nach einem der vorhergehenden Ansprüche, wobei die Anlage als Gepäckprüfanlage zur Inspektion von Gepäckstücken eingerichtet ist und die Detektorzeile für eine Seitenansicht eines Gepäckstücks orthogonal zu einer Förderrichtung für das Gepäckstück durch die Anlage angeordnet ist, wobei an der Detektorzeile ein weiterer Abschnitt mit der höheren Auflösung so angeordnet ist, dass Gepäckstücke bis zu einer bestimmten Größe auf dem weiteren Abschnitt abgebildet werden, und ein erster Abschnitt mit der ersten Auflösung sich an den weiteren Abschnitt so anschließt, dass auf den ersten Abschnitt der Rest eines Gepäckstücks abgebildet wird, das größer als die bestimmte Größe ist.

13. Röntgeninspektionsanlage (100; 200) nach einem der vorhergehenden Ansprüche, wobei die Detektorelemente (12, 14) zur Erfassung von Röntgenstrahlen aus einem Energiebereich oder wenigstens zwei Energiebereichen eingerichtet sind.

14. Verfahren zur zerstörungsfreien Inspektion von Inspektionsobjekten (P; F, C), wobei mit einer Detektorzeile (10), die in einer Längsrichtung (LR) angeordnete erste Detektorelemente (12) und zweite Detektorelemente (14) zur Detektion von Röntgenstrahlen (108; 208) aufweist und die in einem Winkel zu einer Abtastrichtung (AR) für eine zeilenweise Abtastung des Inspektionsobjekts (P; F, C) angeordnet ist, basierend auf mittels der Detektorelemente (12, 14) erfasster Intensitätswerte für Röntgenstrahlen Bildpunkte wenigstens einer Zeile eines Röntgenbilds für das Inspektionsobjekt (P; F, C) bestimmt werden, wobei
Intensitätswerte für Röntgenstrahlen in wenigstens einem Abschnitt (A1, A3) der Detektorzeile (10) mit einer ersten Auflösung und mindestens in einem weiteren Abschnitt (A2) der Detektorzeile (10) mit einer zweiten Auflösung, die höher als die erste Auflösung ist, erfasst werden, und
zur Erzeugung eines Röntgenbilds basierend auf mit der gesamten Detektorzeile (10) erfassten Intensitätsinformationen, Intensitätsinformationen der zweiten Detektorelemente (14) in dem mindestens einen weiteren Abschnitt (A2) von aneinander angrenzenden Gruppen aus einer vorbestimmten Anzahl zweiter Detektorelemente (14) in der Längsrichtung (LR) und einer entsprechenden Anzahl aufeinanderfolgender Auslesungen (t1, t2, t3, ...) zur Bestimmung eines Intensitätsdatums für einen Bildpunkt der ersten Auflösung zusammengefasst werden, und zur Erzeugung eines Röntgenbildes basierend auf in dem mindestens einen weiteren Abschnitt (A2) erfassten Intensitätsdaten pro Auslesung der zweiten Detektorelemente (14) ein Bildpunkt des Röntgenbilds erzeugt wird,
**dadurch gekennzeichnet, dass**
alle Detektorelemente (12, 14) der Detektorzeile (10) mit einer Auslesefrequenz ausgelesen werden, die durch den weiteren Abschnitt (A2) mit der höchsten Auflösung bestimmt ist, und
gleichzeitig ein Röntgenbild mit der ersten Auflösung basierend auf mit der gesamten Detektorzeile (10) erfassten Intensitätsinformationen als auch mindestens ein weiteres Röntgenbild mit der zweiten Auflösung basierend auf in dem mindestens einen weiteren Abschnitt (A2) erfassten Intensitätsdaten erzeugt wird.

15. Verfahren zur zerstörungsfreien Inspektion von Inspektionsobjekten (P; F, C) gemäß Anspruch 14, wobei das Röntgenbild mit der ersten Auflösung und das mindestens eine weitere Röntgenbild mit der zweiten Auflösung wahlweise umschaltbar und/oder nebeneinander auf einer Anzeigeeinheit durch einen Benutzer steuerbar angezeigt werden können.

## Claims

1. An X-ray inspection system (100; 200) for the destruction-free inspection of inspection objects (P; F, C), having a detector unit (106; 206) with a detector row (10) having detector elements (12, 14) arranged in a longitudinal direction (LR) for the detection of X-rays (108; 208) and whose longitudinal direction (LR) is arranged at an angle to a scanning direction (AR) for line-by-line scanning of an inspection object (P; F, C),
wherein the detector row (10) is adapted for scanning the inspection object (P; F, C) in at least a first section (A1.1, A1.2) of the detector row (10) with first detector elements (12) for a first resolution and at least in a further section (A2) of the detector row (10) with further detector elements (14) for a second resolution that is higher than the first resolution, and
wherein the X-ray inspection system (100; 200) is adapted, on the basis of intensity values for X-rays detected by means of the detector elements (12, 14), to determine pixels of at least one line of an X-ray image for the inspection object (P; F, C) and for this purpose further has a control unit (116), wherein the control unit (116) is adapted, for producing an X-ray image on the basis of intensity information detected with the entire detector row (10), to summarize intensity information of the second detector elements (14) in the at least one further section (A2) of mutually adjacent groups from a predetermined number of second detector elements (14) in the longitudinal direction (LR) and a corresponding number of consecutive readouts (t1, t2, t3, ...) for determining an intensity datum for a pixel of the first resolution, and/to produce a pixel of the X-ray image/for producing an X-ray image/on the basis of intensity data detected in the at least one further section (A2) per readout of the second detector elements (14),
**characterized in that** the control unit (116) is adapted,
- to read out all detector elements (12, 14) of the detector row (10) with a readout frequency that is determined by the further section (A2) with the highest resolution,
and
- to produce at the same time an X-ray image with the first resolution on the basis of intensity information detected with the entire detector row (10) and at least one further X-ray image with the second resolution on the basis of the intensity data detected in the at least one further section (A2).

2. The X-ray inspection system (100; 200) according to claim 1, wherein the longitudinal direction (LR) of the detector row (10) is arranged orthogonally to the scanning direction (AR).

3. The X-ray inspection system (100; 200) according to claim 1 or 2, wherein the detector unit (106; 206) has exactly one detector row (10).

4. The X-ray inspection system (100; 200) according to any of the preceding claims, wherein all detector elements (12, 14) of the detector row (10) are of equal width in the scanning direction (AR).

5. The X-ray inspection system (100; 200) according to any of the preceding claims, wherein the width (B) of all detector elements (12, 14) corresponds to the length (LB) of the first detector elements (12) in the first section (A1.1, A1.2).

6. The X-ray inspection system (100; 200) according to any of the preceding claims, wherein the further detector elements (14) in the at least one further section (A2) are adapted for a resolution which is an integer multiple (n) of the first resolution.

7. The X-ray inspection system (100; 200) according to any of claims 1 to 6, wherein the readout frequency is greater than or equal to the product of the scanning speed in the scanning direction (AR) and the reciprocal of the length (LH) of a second detector element (12) in the further section (A2) with the highest resolution.

8. The X-ray inspection system (100; 200) according to any of the preceding claims, wherein the control unit (116) is adapted, in the production of an X-ray image on the basis of intensity information detected with the entire detector row (10), to determine the predetermined number of second detector elements (14) in the longitudinal direction (LR) and the corresponding number of consecutive readouts (t1, t2, t3, ...) as quotients from the resolution in the further section (A2) divided by the resolution of the at least one first section (A1.1, A1.2).

9. The X-ray inspection system (100) according to any of the preceding claims, wherein the system (100) is adapted for body inspection of a person (P), wherein the detector row (10) is arranged parallel to the longitudinal axis of the body (K) of the person (P) and at least one further section (A2) is oriented for the inspection of a certain body region of the person (P), and the scanning direction (AR) is oriented orthogonally to the longitudinal axis of the body (K).

10. The X-ray inspection system (100) according to claim 9, wherein the at least one further section (A2) is oriented for the inspection of the torso (T) and/or the head of the person (P).

11. The X-ray inspection system (200) according to any of the preceding claims, wherein the system (200) is adapted for inspecting a vehicle (F) and/or a freight container (C) and the detector row (10), for a side view of the vehicle (F) and/or of the freight container (C) or for a plan view of the vehicle (F) and/or the freight container (C), is arranged orthogonally to a longitudinal axis of the vehicle (F) or freight container (C), wherein there is arranged a first section (A1.1, A1.2) at at least one end of the detector row (10) and there is arranged at least one further section (A2) at the center of the detector row (10).

12. The X-ray inspection system according to any of the preceding claims, wherein the system is adapted as a baggage inspection system for inspecting baggage items and the detector row, for a side view of a baggage item, is arranged orthogonally to a conveying direction for the baggage item through the system, wherein a further section with the higher resolution is arranged on the detector row such that baggage items up to a determined size are imaged on the further section, and a first section with the first resolution adjoins the further section in such a manner that the rest of a baggage item that is larger than the determined size is imaged onto the first section.

13. The X-ray inspection system (100; 200) according to any of the preceding claims, wherein the detector elements (12, 14) are adapted for detecting X-rays from one energy range or at least two energy ranges.

14. A method for the destruction-free inspection of inspection objects (P; F, C), wherein, with a detector row (10) which has first detector elements (12) and second detector elements (14) arranged in a longitudinal direction (LR) for the detection of X-rays (108; 208) and which is arranged at an angle to a scanning direction (AR) for line-by-line scanning of the inspection object (P; F, C), there are determined pixels of at least one line of an X-ray image for the inspection object (P; F, C) on the basis of the intensity values for X-rays detected by means of the detector elements (12, 14), wherein
intensity values for X-rays are detected in at least one section (A1, A3) of the detector row (10) with a first resolution and at least in one further section (A2) of the detector row (10) with a second resolution that is higher than the first resolution, and
for producing an X-ray image on the basis of intensity information detected with the entire detector row (10), intensity information of the second detector elements (14) in the at least one further section (A2) of mutually adjacent groups from a predetermined number of second detector elements (14) in the longitudinal direction (LR) and of a corresponding number of consecutive readouts (t1, t2, t3, ...) are summarized for determining an intensity datum for a pixel of the first resolution, and a pixel of the X-ray image is produced for producing an X-ray image on the basis of intensity data detected in the at least one further section (A2) per readout of the second detector elements (14),
**characterized in that**
all detector elements (12, 14) of the detector row (10) are read out with a readout frequency that is determined by the further section (A2) with the highest resolution, and
at the same time, an X-ray image with the first resolution is produced on the basis of intensity information detected with the entire detector row (10) and at least one further X-ray image with the second resolution is produced on the basis of the intensity data detected in the at least one further section (A2).

15. The method for the destruction-free inspection of inspection objects (P; F, C) according to claim 14, wherein the X-ray image with the first resolution and the at least one further X-ray image with the second resolution can be displayed selectively in switchable manner and/or next to each other on a display unit in a manner controllable by a user.

## Revendications

1. Installation d'inspection aux rayons X (100; 200) destinée à l'inspection non destructive d'objets d'inspection (P; F, C), comportant une unité de détecteur (106; 206) ayant une barrette de détecteur (10) comportant des éléments de détecteur (12, 14) agencés dans une direction longitudinale (LR) pour la détection de rayons X (108; 208) et dont la direction longitudinale (LR) est agencée de manière à former un angle par rapport à une direction de balayage (AR) pour un balayage ligne par ligne d'un objet d'inspection (P; F, C),
cependant que la barrette de détecteur (10) est, pour le balayage de l'objet d'inspection (P; F, C), équipée, dans au moins une première section (A1.1, A1.2) de la barrette de détecteur (10), de premiers éléments de détecteur (12) pour une première résolution, et équipée, au moins dans une autre section (A2) de la barrette de détecteur (10), d'autres éléments de détecteur (14) pour une deuxième résolution supérieure à la première résolution, et
cependant que l'installation d'inspection aux rayons X (100; 200) est conçue pour, sur la base de valeurs d'intensité pour rayons X saisies au moyen des éléments de détecteur (12, 14), déterminer pour l'objet d'inspection (P; F, C) des points d'image d'au moins une ligne d'une image aux rayons X, et comporte en outre une unité de commande (116), cependant que l'unité de commande (116) est équipée pour, aux fins de la génération d'une image aux rayons X sur la base d'informations d'intensité saisies avec l'ensemble de la barrette de détecteur (10), regrouper des informations d'intensité des deuxièmes éléments de détecteur (14) situés dans la au moins une autre section (A2) de groupes adjacents entre eux d'un nombre prédéterminé de deuxièmes éléments de détecteur (14) dans la direction longitudinale (LR) et un nombre correspondant de relevés consécutifs (t1, t2, t3, ...) pour la détermination d'une donnée d'intensité pour un point d'image de la première résolution, et pour, aux fins de la génération d'une image aux rayons X, sur la base de données d'intensité saisies dans la au moins une autre section (A2), générer par relevé des deuxièmes éléments de détecteur (14) un point d'image de l'image aux rayons X,
**caractérisé en ce que** l'unité de commande (116) est équipée pour
- relever tous les éléments de détecteur (12, 14) de la barrette de détecteur (10) à une fréquence de relevés déterminée par l'autre section (A2) ayant la plus haute résolution, et
- générer simultanément tant une image aux rayons X avec la première résolution sur la base d'informations d'intensité saisies avec l'ensemble de la barrette de détecteur (10), qu'au moins une autre image aux rayons X avec la deuxième résolution sur la base de données d'intensité saisies dans la au moins une autre section (A2).

2. Installation d'inspection aux rayons X (100; 200) selon la revendication 1, cependant que la direction longitudinale (LR) de la barrette de détecteur (10) est agencée de manière orthogonale à la direction de balayage (AR).

3. Installation d'inspection aux rayons X (100; 200) selon la revendication 1 ou 2, cependant que l'unité de détecteur (106; 206) comporte exactement une barrette de détecteur (10).

4. Installation d'inspection aux rayons X (100; 200) selon une des revendications précédentes, cependant que tous les éléments de détecteur (12, 14) de la barrette de détecteur (10) sont de même largeur dans la direction de balayage (AR).

5. Installation d'inspection aux rayons X (100; 200) selon une des revendications précédentes, cependant que la largeur (B) de tous les éléments de détecteur (12, 14) correspond à la longueur (LB) des premiers éléments de détecteur (12) situés dans la première section (A1.1, A1.2).

6. Installation d'inspection aux rayons X (100; 200) selon une des revendications précédentes, cependant que les autres éléments de détecteur (12, 14) situés dans la au moins une autre section (A2) sont équipés pour une résolution qui est un multiple entier (n) de la première résolution.

7. Installation d'inspection aux rayons X (100; 200) selon une des revendications de 1 à 6, cependant que la fréquence de relevés est supérieure ou égale au produit de la vitesse de balayage dans la direction de balayage (AR) et de la valeur inverse de la longueur (LH) d'un deuxième éléments de détecteur (12) situé dans l'autre section (A2) ayant la plus haute résolution.

8. Installation d'inspection aux rayons X (100; 200) selon une des revendications précédentes, cependant que l'unité de commande (116) est équipée pour, lors de la génération d'une image aux rayons X sur la base d'informations d'intensité saisies avec l'ensemble de la barrette de détecteur (10), déterminer le nombre prédéterminé de deuxièmes éléments de détecteur (14) dans la direction longitudinale (LR) et le nombre correspondant de relevés consécutifs (t1, t2, t3, ...) en tant que quotient obtenu en divisant la résolution dans l'autre section (A2) par la résolution de la au moins une première section (A1.1, A1.2).

9. Installation d'inspection aux rayons X (100) selon une des revendications précédentes, cependant que l'installation (100) est équipée pour l'inspection corporelle d'une personne (P), cependant que la barrette de détecteur (10) est agencée parallèlement à l'axe longitudinal du corps (K) de la personne (P) et qu'au moins une autre section (A2) est équipée pour l'inspection d'une zone corporelle déterminée de la personne (P), et que la direction de balayage (AR) est orthogonale à l'axe longitudinal du corps (K).

10. Installation d'inspection aux rayons X (100) selon la revendication 9, cependant que la au moins une autre section (A2) est équipée pour l'inspection du torse (T) et/ou de la tête de la personne (P).

11. Installation d'inspection aux rayons X (200) selon une des revendications précédentes, cependant que l'installation (200) est équipée pour l'inspection d'une véhicule (F) et/ou d'un conteneur de fret (C) et que la barrette de détecteur (10) est, pour une vue latérale du véhicule (F) et/ou du conteneur de fret (C) ou pour une vue de dessus sur le véhicule (F) et/ou sur le conteneur de fret (C), agencée orthogonalement à l'axe longitudinal du véhicule (F) et/ou du conteneur de fret (C), cependant que, à au moins une extrémité de la barrette de détecteur (10), une première section (A1.1, A1.2) est agencée, et que, au milieu de la barrette de détecteur (10), au moins une autre section (A2) est agencée.

12. Installation d'inspection aux rayons X selon une des revendications précédentes, cependant que l'installation est équipée en tant qu'installation de vérification de bagages pour l'inspection de bagages et que la barrette de détecteur est, pour une vue latérale d'un bagage, agencée orthogonalement à une direction de convoyage pour le bagage par l'installation, cependant que, à la barrette de détecteur, une autre section ayant la résolution plus haute est agencée de telle façon que des bagages sont, jusqu'à une certaine taille, reproduits sur l'autre section, et qu'une première section ayant la première résolution est de telle manière adjacente à l'autre section que, sur la première section, le reste d'un bagage plus grand que la taille déterminée est reproduit.

13. Installation d'inspection aux rayons X (100; 200) selon une des revendications précédentes, cependant que les éléments de détecteur (12, 14) sont équipés pour la saisie de rayons X d'une zone d'énergie ou d'au moins deux zones d'énergie.

14. Procédé d'inspection non destructive d'objets d'inspection (P; F, C), cependant que, avec une barrette de détecteur (10) qui comporte, agencés dans une direction longitudinale (LR), des premiers éléments de détecteur (12) et des deuxièmes éléments de détecteur (14) pour la détection de rayons X (108; 208) et qui est agencée de manière à former un angle par rapport à une direction de balayage (AR) pour un balayage ligne par ligne de l'objet d'inspection (P; F, C), sur la base de valeurs d'intensité pour rayons X saisies au moyen des éléments de détecteur (12, 14), des points d'image d'au moins une ligne d'une image aux rayons X pour l'objet d'inspection (P; F, C) sont déterminés, cependant que
des valeurs d'intensité pour des rayons X dans au moins une section (A1, A3) de la barrette de détecteur (10) ayant une première résolution et au moins dans une autre section (A2) de la barrette de détecteur (10) ayant une deuxième résolution supérieure à la première résolution sont saisies, et
pour la génération d'une image aux rayons X sur la base d'informations d'intensité saisies avec l'ensemble de la barrette de détecteur (10), des informations d'intensité des deuxièmes éléments de détecteur (14) situés dans la au moins une autre section (A2) de groupes adjacents entre eux d'un nombre prédéterminé de deuxièmes éléments de détecteur (14) dans la direction longitudinale (LR) et un nombre correspondant de relevés consécutifs (t1, t2, t3, ...) sont regroupés pour la détermination d'une donnée d'intensité pour un point d'image de la première résolution, et pour la génération d'une image aux rayons X, sur la base de données d'intensité saisies dans la au moins une autre section (A2), par relevé des deuxièmes éléments de détecteur (14), un point d'image de l'image aux rayons X est généré,
**caractérisé en ce que**
tous les éléments de détecteur (12, 14) de la barrette de détecteur (10) sont relevés à une fréquence de relevés déterminée par l'autre section (A2) ayant la plus haute résolution, et
simultanément, tant une image aux rayons X avec la première résolution sur la base d'informations d'intensité saisies avec l'ensemble de la barrette de détecteur (10), qu'au moins une autre image aux rayons X avec la deuxième résolution sur la base de données d'intensité saisies dans la au moins une autre section (A2) est générée.

15. Procédé d'inspection non destructive d'objets d'inspection (P; F, C) selon la revendication 14, cependant que l'image aux rayons X avec la première résolution et la au moins une autre image aux rayons X avec la deuxième résolution peuvent être commutées au choix et/ou être affichées l'une à côté de l'autre sur une unité d'affichage de manière commandable par un utilisateur.
